# FASCICULE DE BREVET EUROPEEN

(11) **EP 3 497 512 B1**
(45) Date de publication et mention de la délivrance du brevet: **03.06.2020**
(21) Numéro de dépôt: 17754415.2
(22) Date de dépôt: 27.07.2017
(51) Int. Cl.: G02F 1/025

(54) **PROCEDE DE FABRICATION D'UN MODULATEUR DES PERTES DE PROPAGATION ET DE L'INDICE DE PROPAGATION D'UN SIGNAL OPTIQUE**
VERFAHREN ZUR HERSTELLUNG EINES MODULATORS DER AUSBREITUNG UND VON AUSBREITUNGSINDEXVERLUSTEN EINES OPTISCHEN SIGNALS
METHOD FOR PRODUCING A MODULATOR OF PROPAGATION AND PROPAGATION INDEX LOSSES OF AN OPTICAL SIGNAL

(30) Priorité: 08.08.2016 FR 1657626
(43) Date de publication de la demande: 19.06.2019
(73) Titulaire: Commissariat à l'Energie Atomique et aux Energies Alternatives, 75015 Paris (FR)
(72) Inventeur: MENEZO, Sylvie, 38500 Voiron (FR); GIRARD, Olivier, 38120 Saint Egrève (FR)
(74) Mandataire: GIE Innovation Competence Group
(86) Numéro de dépôt international: PCT/FR2017/052100
(87) Numéro de publication internationale: WO 2018/029414

(56) Documents cités:
- WO-A1-2005/091057
- WO-A1-2013/155378
- WO-A1-2015/194002
- US-A1- 2011 073 989
- US-A1- 2015 055 910

## Description

L'invention concerne procédé de fabrication d'un modulateur des pertes de propagation et de l'indice de propagation d'un signal optique guidé ainsi qu'un modulateur fabriqué par ce procédé.

Par perte de propagation, on désigne les pertes optiques vues par le mode optique se propageant dans un guide d'onde dans lequel il est guidé.

Par indice de propagation, on désigne l'indice effectif de propagation du mode optique se propageant dans un guide d'onde dans lequel il est guidé.

De tels modulateurs connus comportent un guide d'onde formé par l'empilement immédiatement les uns sur les autres :
- d'une extrémité proximale d'une première électrode,
- d'une fine couche diélectrique, et
- d'une extrémité proximale d'une seconde électrode.

En appliquant une différence de potentiels entre les première et seconde électrodes, la densité de porteurs de charges au niveau des interfaces entre la couche diélectrique et les extrémités proximales des première et seconde électrodes est modifiée. Cela induit une modification des pertes de propagation et de l'indice de propagation vus par le champ optique guidé et se propageant dans le guide d'onde. Typiquement, la couche diélectrique est une couche en dioxyde de silicium.

Les procédés connus de fabrication d'un tel modulateur comportent :
- la fourniture d'un empilement comportant successivement un support, une couche enterrée en matériau diélectrique et une couche semi-conductrice, l'épaisseur de la couche enterrée étant égale à e₂ᵢₙᵢ à plus ou moins 5 nm près, où e₂ᵢₙᵢ est une constante, puis
- la gravure de la couche semi-conductrice pour structurer une première électrode du modulateur dans cette couche semi-conductrice, cette première électrode présentant une extrémité proximale, une extrémité distale et une partie intermédiaire qui s'étend, dans une direction transversale, depuis l'extrémité proximale jusqu'à l'extrémité distale pour relier mécaniquement et électriquement ces extrémités, puis
- l'encapsulation de la couche semi-conductrice structurée, dans un matériau diélectrique pour obtenir une couche semi-conductrice encapsulée dans un matériau diélectrique dans laquelle le matériau diélectrique se prolonge, dans la direction transversale, jusqu'à toucher directement l'extrémité proximale de la première électrode, puis
- le collage d'un substrat sur la couche semi-conductrice encapsulée, puis
- la réalisation d'une seconde électrode du modulateur présentant une extrémité proximale en vis-à-vis de l'extrémité proximale de la première électrode, ces extrémités proximales étant uniquement séparées l'une de l'autre par une couche diélectrique de manière à former un guide d'onde apte à guider le signal optique à moduler.

Par exemple, un tel procédé de fabrication est divulgué dans la demande WO2011037686.

Le procédé de la demande WO 2011037686, est intéressants car il permet de fabriquer des modulateurs dans lesquels l'épaisseur de la couche diélectrique est faible, c'est-à-dire inférieure à 25 nm. Ceci est avantageux car un tel modulateur présente alors à la fois une bonne efficacité de modulation et de faibles pertes de propagation.

Par contre, la mise en œuvre des procédés connus de fabrication décrits dans ces demandes conduit à des modulateurs dont les performances sont dispersées. Par « performances », on désigne ici notamment la bande passante du modulateur et l'efficacité de modulation de ce modulateur. L'efficacité de modulation est le rapport entre la variation d'indice de réfraction induite par volt appliqué entre les deux électrodes du modulateur.

Par « dispersion des performances », on désigne le fait que les performances d'un modulateur à un autre varient et cela même si tous ces modulateurs sont fabriqués par le même procédé de fabrication. De telles variations sont typiquement causées par des imprécisions lors de la fabrication qui modifient, de façon aléatoire et non contrôlée, la capacité du condensateur formé par la couche diélectrique interposée entre les deux électrodes du modulateur, et la position du maximum d'intensité du champ optique guidé par le modulateur. Par exemple, il peut s'agir d'imprécision sur l'épaisseur de la couche diélectrique ou sur les positions des électrodes l'une par rapport à l'autre.

De l'état de la technique est également connu de :
- US 2015/0055910A1,
- WO2005/091057A1,
- WO2015/194002A1,
- WO2013/155378A1,
- US8363986B2, et
- FR2867898.

L'invention vise à proposer un procédé de fabrication qui réduit la dispersion des performances des modulateurs fabriqués par ce procédé. Autrement dit, l'objectif est d'obtenir un procédé de fabrication qui rend plus homogènes les performances des modulateurs fabriqués. Elle a donc pour objet un tel procédé conforme à la revendication 1.

Dans le procédé revendiqué, la couche diélectrique est directement formée par la couche enterrée construite avant la réalisation de la première électrode. Par « directement » formé par une couche enterrée, on désigne le fait que la couche diélectrique est obtenue sans modifier substantiellement l'épaisseur initiale e₂ᵢₙᵢ de la couche enterrée. Par l'expression « sans modifier substantiellement l'épaisseur initiale », on désigne le fait que l'épaisseur initiale e₂ᵢₙᵢ de la couche enterrée qui forme la couche diélectrique interposée entre les électrodes du modulateur n'est pas augmentée ou diminuée de plus de errₚ par rapport à son épaisseur initiale e₂ᵢₙᵢ, où errₚ est une constante égale à 5 nm ou 4 nm et, de préférence, égale à 3 nm ou 1 nm. En particulier, dans le procédé revendiqué, la couche diélectrique n'est pas le résultat de la formation sur la première électrode d'une couche en matériau diélectrique. Elle n'est pas non plus le résultat de l'amincissement d'une couche diélectrique plus épaisse. À cause de cela, l'épaisseur de la couche diélectrique est contrôlée avec une précision accrue par rapport aux procédés connus de fabrication de modulateurs. De plus, l'épaisseur de la couche diélectrique est plus homogène. Il en résulte que la dispersion de la capacité du condensateur du modulateur est beaucoup plus faible en mettant en œuvre le procédé revendiqué qu'avec les procédés connus de fabrication. Cela permet donc de fabriquer des modulateurs dont les performances sont plus homogènes. En particulier, la bande passante et l'efficacité de modulation des modulateurs fabriqués par le procédé revendiqué sont beaucoup moins dispersées que s'ils avaient été fabriqués par un procédé connu comme celui décrit dans la demande WO 2011037686 ou US 20150055910.

De plus, le procédé revendiqué permet d'encapsuler la première électrode du modulateur dans un matériau diélectrique sans avoir à laisser un espace vide à côté de cette première électrode. Ceci est particulièrement avantageux car, dans les procédés connus comme celui de la demande US 20150055910 où un tel espace vide existe, cette espace vide se retrouve sous la seconde électrode. Or un espace vide entre la seconde électrode et le support crée un capacité parasite qui dégrade les performances du modulateur.

Les modes de réalisation de ce procédé de fabrication peuvent comporter une ou plusieurs des caractéristiques des revendications dépendantes.

Les modes de réalisation du procédé de fabrication revendiqué peuvent en plus présenter un ou plusieurs des avantages suivants :
- Le procédé revendiqué permet d'utiliser une couche d'oxyde de silicium thermique en tant que couche diélectrique, ce qui améliore le collage de la seconde électrode et donc, en fin de compte, les performances du modulateur.
- Le fait d'avoir une extrémité proximale plus épaisse que la partie intermédiaire de la même électrode rend le procédé moins sensible aux erreurs de positionnement d'une électrode par rapport à l'autre électrode. Plus précisément, cela permet de contrôler plus finement la position du maximum d'intensité du champ optique guidé par le modulateur et donc l'efficacité du modulateur fabriqué. Grâce à cela les performances des modulateurs fabriqués sont encore plus homogènes.
- Le fait de doper plus fortement l'extrémité proximale seulement dans une région proche de la couche diélectrique permet, à performances égales, de diminuer les pertes de propagation du modulateur fabriqué à résistances d'accès égales, ou de diminuer la résistance d'accès à pertes de propagation optique égales tout en conservant la répartition du champ optique inchangée.
- Le fait que l'épaisseur de la couche diélectrique soit inférieure à 25 nm ou 15 nm permet d'obtenir des modulateurs qui présentent une bonne efficacité de modulation.
- Le fait de réaliser en même temps que le modulateur, une source laser qui comporte un guide d'onde en matériau III-V couplé à un guide d'onde optique par l'intermédiaire de la même couche diélectrique permet en plus d'homogénéiser les caractéristiques de cette source laser sans ajouter d'étape supplémentaire au procédé de fabrication du modulateur.

L'invention a également pour objet un modulateur conforme à la revendication 9.

L'invention sera mieux comprise à la lecture de la description qui va suivre, donnée uniquement à titre d'exemple non limitatif et faite en se référant aux dessins sur lesquels :
- la figure 1 est une illustration schématique d'un transmetteur en coupe verticale ;
- la figure 2 est une illustration schématique, en vue de dessus, d'un modulateur et d'un dispositif d'accord de phase du transmetteur de la figure 1 ;
- la figure 3 est une illustration agrandie, en coupe verticale, du modulateur du transmetteur de la figure 1,
- la figure 4 est un organigramme d'un procédé de fabrication du transmetteur de la figure 1 ;
- les figures 5 à 16 sont des illustrations schématiques, en coupe verticale, de différents états de fabrication obtenus lors de la mise en œuvre du procédé de la figure 4 ;
- les figures 17 à 21 sont des illustrations schématiques, en coupe verticale, d'autres modes de réalisation possibles du modulateur de la figure 3 ;
- la figure 22 est une illustrations schématiques, en coupe verticale, d'un autre mode de réalisation du transmetteur de la figure 1.

Dans ces figures, les mêmes références sont utilisées pour désigner les mêmes éléments. Dans la suite de cette description, les caractéristiques et fonctions bien connues de l'homme du métier ne sont pas décrites en détail.

Dans ce texte, les expressions « la couche est réalisée en matériau M », « couche de matériau M » ou « couche M », désignent une couche dans laquelle le matériau M représente au moins 90 % , et de préférence au moins 95 % ou 99 %, de la masse de cette couche.

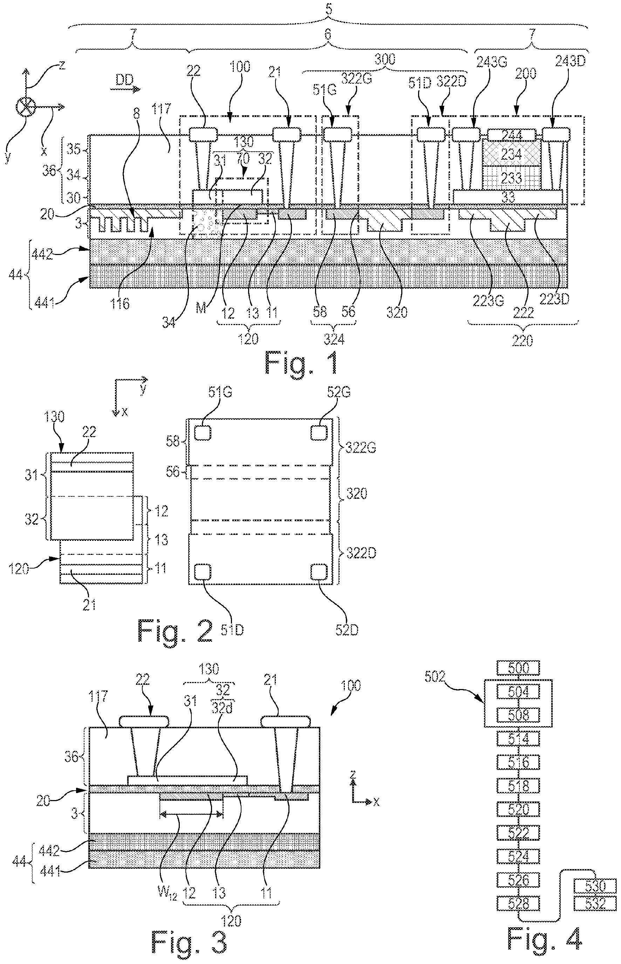

La figure 1 représente un transmetteur 5 d'un signal optique modulé en phase et/ou en amplitude pour transmettre des bits d'informations vers un récepteur par l'intermédiaire d'une fibre optique par exemple. A cet effet, le transmetteur 5 comporte une source laser 7 qui émet un signal optique dont la phase et/ou l'amplitude est ensuite modulée par un système 6 de modulation de phase et/ou d'amplitude de ce signal optique.

Par exemple, la longueur d'onde λ_{Li} du signal optique émis par la source laser 7 est comprise entre 1250 nm et 1590 nm.

Typiquement, la source laser 7 est un laser DBR (« distributed bragg reflector laser ») ou DFB (« distributed feedback laser »). Une telle source laser est bien connue et seuls les détails nécessaires pour la compréhension de l'invention sont décrits ici. Par exemple, pour des détails généraux et le fonctionnement d'une telle source laser, le lecteur peut se référer aux articles suivants :
- Xiankai Sun et Amnon. Yariv : "Engineering supermode silicon/III-V hybrid waveguides for laser oscillation », Vol. 25, No. 6/Juin 2008/Journal of the Optical. Society of America B
- B. Ben Bakir et al., « Hybrid Si/III-V lasers with adiabatic coupling », 2011.
- B. Ben Bakir, C. Sciancalepore, A. Descos, H. Duprez, D. Bordel, L. Sanchez, C. Jany, K. Hassan, P. Brianceau, V. Carron, and S. Menezo, « Heterogeneously Integrated III-V on Silicon Lasers », Invited Talk ECS 2014.

Pour simplifier la figure 1 et les figures suivantes, seul un guide d'onde laser hybride 200, 220 et un coupleur surfacique 8 (connu sous le terme anglais de « Surface grating coupler ») de la source laser 7 sont représentés.

Un tel coupleur 8 est par exemple décrit dans l'article suivant : F. Van Laere, G. Roelkens, J. Schrauwen, D. Taillaert, P. Dumon, W. Bogaerts, D. Van Thourhout and R. Baets, « Compact grating couplers between optical fibers and Silicon-on-Insulator photonic wire waveguides with 69% coupling efficiency*".* Il est réalisé dans une couche semi-conductrice encapsulée 3. Par conception , le coupleur peut émettre vers le haut ou vers le bas. Il est dans cette description renversé, mais on peut choisir par conception de le faire émettre vers le haut ou vers le bas. La couche 3 comporte ici du silicium monocristallin structuré encapsulé dans un matériau diélectrique 116. Généralement, un matériau diélectrique a une conductivité électrique à 20 °C inférieure à 10⁻⁷S/m et, de préférence, inférieure à 10⁻⁹S/m ou 10⁻¹⁵S/m. De plus, dans le cas du matériau diélectrique 116, son indice de réfraction est strictement inférieur à l'indice de réfraction du silicium. Par exemple, dans ce mode de réalisation, le matériau diélectrique 116 est du dioxyde de silicium (SiO₂).

La couche 3 s'étend horizontalement et directement sur un substrat rigide 44. Dans la couche 3, le silicium monocristallin est situé dans un même plan horizontal parallèle au plan du substrat 44. Ici, le silicium monocristallin de la couche 3 est également isolé mécaniquement et électriquement du substrat 44 par une épaisseur du matériau diélectrique 116. Typiquement, l'épaisseur maximale de silicium monocristallin dans la couche 3 est comprise entre 100 nm et 800 nm. Dans cet exemple, l'épaisseur maximale du silicium monocristallin dans la couche 3 est égale à 500 nm.

Sur la figure 1 et les figures suivantes, l'horizontal est représenté par des directions X et Y d'un repère orthogonal. La direction Z de ce repère orthogonal représente la direction verticale. Par la suite, les termes tels que « supérieur », « inférieur », « au-dessus », « en dessous », « haut » et « bas » sont définis par rapport à cette direction Z. Les termes « gauche » et « droite » sont définis par rapport à la direction X. Les termes « avant » et « arrière » sont définis par rapport à la direction Y.

La figure 1 représente les éléments du transmetteur 5 en coupe dans un plan vertical parallèle aux directions X et Z.

Le substrat 44 s'étend horizontalement. Il est formé d'un empilement successif d'un support 441 et d'une couche 442 en matériau diélectrique. L'épaisseur du support 441 est typiquement supérieure à 80 µm ou 400 µm. Par exemple, le support 441 est un support en silicium. La couche 442 est en dioxyde de silicium. L'épaisseur de la couche 442 est typiquement supérieure à 500 nm ou 1 µm voire plus.

Le guide d'onde laser hybride 200, 220 est constitué d'un guide d'onde 200 réalisé dans un matériau a gain III-V et d'un guide d'onde 220 en silicium monocristallin. Généralement le guide d'onde 200 est utilisé pour générer et amplifier un signal optique à l'intérieur d'une cavité optique de la source laser 7. Ici, à cet effet, il est réalisé dans une couche 36 comportant un matériau à gain III-V encapsulé dans un matériau diélectrique 117. Par exemple, le matériau 117 est du dioxyde de silicium ou du nitrure de silicium. Cette couche 36 s'étend horizontalement directement sur une couche diélectrique 20. La couche 20 s'étend elle-même horizontalement directement sur une face supérieure de la couche 3.

L'épaisseur de la couche 20 est typiquement comprise entre 5 nm et 25 nm et, de préférence, entre 10 nm et 25 nm. Ici, l'épaisseur de la couche 20 est égale à 20 nm.

La couche 36 comprend typiquement une sous-couche inférieure dopée 30, un empilement 34 de puits quantiques ou boites quantiques en quaternaire et une sous-couche supérieure 35 dopée avec un dopant de signe opposé à celui de la sous-couche 30. Les sous-couches 30 et 35 sont ici en InP dopée.

Sur la figure 1, seule une bande 33, un empilement 233 et une bande 234 réalisés, respectivement, dans la sous-couche 30, l'empilement 34 et la sous-couche 35 sont représentés. Cette superposition de la bande 33, de l'empilement 233 et de la bande 234 constitue le guide d'onde 200.

Le guide d'onde 200 comporte également :
- des prises 243G et 243D de contact en contact mécanique et électrique directement avec la bande 33 et situées, respectivement, à gauche et à droite de l'empilement 233, et
- une prise 244 de contact en contact mécanique et électrique directement avec la bande 234.

Ces prises 243G, 243D et 244 permettent d'injecter un courant électrique dans l'empilement 233 entre les prises 243G, 243D et la prise 244.

Le guide d'onde 220 est réalisé dans le silicium monocristallin de la couche 3. Ce guide d'onde 220 s'étend sous la bande 33. Typiquement, son épaisseur et sa largeur varient suivant Y comme décrit dans l'article précédemment cité de Ben Bakir et. Al. Dans la figure 1, le guide d'onde 220 est représenté, à titre d'illustration, dans le cas particulier où la direction de propagation du signal optique à l'intérieur de ce guide d'onde est parallèle à la direction Y. Par exemple, à cet effet, le guide d'onde 220 adopte une configuration connue sous le terme anglais de « rib ». Ainsi, la section transversale de ce guide d'onde, parallèlement au plan XZ, présente une nervure centrale 222 à partir de laquelle s'étendent de chaque côté, parallèlement à la direction X, des bras latéraux 223G et 223D plus fins. Ici, le guide d'onde 220 est uniquement séparé de la bande 33 par une portion de la couche 20. Par exemple, le guide d'onde 220 est raccordé optiquement au guide d'onde 200 par un couplage adiabatique ou évanescent. Pour une description détaillée d'un couplage adiabatique le lecteur peut se référer à l'article précédemment cité de X. Sun and A. Yariv ou à l'article suivant : Amnon Yariv et al., « Supermode Si/III-V hybrid Lasers, optical amplifiers and modulators: proposal and analysis » Optics Express 9147, vol. 14, No. 15, 23/07/2007.
Les caractéristiques du couplage optique entre le guide d'onde 220 et le guide d'onde 200 dépendent notamment des dimensions du guide d'onde 220 et, en particulier, de l'épaisseur de la nervure centrale 222. Il est donc important que l'épaisseur de cette nervure 222 puisse être ajustée indépendamment des dimensions des autres composants photoniques réalisés sur le même substrat 44. Par exemple, ici, l'épaisseur de la nervure 222 est égale à l'épaisseur maximale du silicium monocristallin dans la couche 3, c'est-à-dire ici à 500 nm.

Le système 6 peut être un système de modulation de la phase seule, ou de l'amplitude seule ou simultanément de la phase et de l'amplitude. Pour moduler la phase ou l'amplitude du signal optique, le système 6 comporte au moins un modulateur des perte de propagation et de l'indice de propagation d'un signal optique guidé et, souvent, au moins un dispositif d'accord de phase. Par exemple, le système 6 est un interféromètre de Mach-Zehnder dans lequel le modulateur 100 et le dispositif 300 d'accord de phase sont agencés dans l'une des branches de cet interféromètre pour moduler l'amplitude et/ou la phase du signal optique généré par la source laser 7. La structure d'un interféromètre de Mach-Zehnder est bien connue et n'est pas décrite ici. Par conséquent, pour simplifier la figure 1, seul un modulateur 100 et un dispositif 300 d'accord de phase sont représentés.

Le dispositif 300 permet d'ajuster la phase d'un signal optique se propageant parallèlement à la direction Y à l'intérieur d'un guide d'onde 320. Par exemple, le guide d'onde 320 est plus long dans la direction Y que large dans la direction X. Le guide d'onde 320 est réalisé dans le silicium monocristallin de la couche 3. Ici, son épaisseur est par exemple égale à l'épaisseur du renflement 222. L'indice de réfraction du silicium varie fortement en fonction de la température. Ainsi, en faisant varier la température du guide d'onde 320, on peut modifier l'indice de propagation du signal optique dans ce guide d'onde et donc ajuster la phase du signal optique. A cet effet, le dispositif 300 comporte deux chaufferettes 322G et 322D disposées chacune d'un côté respectif du guide d'onde 320. Ici, la chaufferette 322D se déduit de la chaufferette 322G par symétrie par rapport à un plan vertical parallèle aux directions Y et Z et passant par le milieu du guide d'onde 320. Ainsi, seule la chaufferette 322G va maintenant être décrite plus en détail en référence aux figures 1 et 2.

La chaufferette 322G comporte un bras 324 qui s'étend, parallèlement à la direction X, depuis une extrémité proximale 56 jusqu'à une extrémité distale 58. Le bras 324 s'étend également parallèlement à la direction Y. Le bras 324 est réalisé dans le silicium monocristallin de la couche 3.

L'extrémité proximale 56 est directement en contact mécanique avec le guide d'onde 320. Ici, l'extrémité proximale 56 touche un flanc vertical du guide d'onde 320. A cet effet, le bras 324 et le guide d'onde 320 ne forme qu'un seul bloc de matière.

L'épaisseur de l'extrémité proximale 56 est inférieure à l'épaisseur maximale du guide d'onde 320 de manière à confiner le signal optique dans le guide d'onde 320. Par exemple, l'épaisseur de l'extrémité proximale 56 est 1,5 fois ou deux fois ou trois fois ou quatre fois plus petite que l'épaisseur maximale du guide d'onde 320.

L'extrémité distale 58 est dopée pour rendre résistif le silicium monocristallin et former une résistance électrique qui ne forme qu'un seul bloc de matière avec le guide d'onde 320. Sur la figure 1, les régions dopées du silicium monocristallin sont finement hachurées et apparaissent en foncé. La distance la plus courte entre cette région dopée du bras 324 et le guide d'onde 320 est, par exemple, strictement supérieure à 200 nm ou 400 nm.

Pour faire circuler un courant électrique à l'intérieur de l'extrémité distale 58, la chaufferette 322G comporte aussi deux prises de contact 51G et 52G en contact mécanique et électrique directement avec l'extrémité distale 58. Ici, ces prises 51G et 52G sont situées l'une derrière l'autre dans la direction Y et à chaque bout de l'extrémité distale 58 dans cette direction Y. Les prises de contact de la chaufferette 322D, visibles sur la figure 2, portent, respectivement, les références 51D et 52D.

Lorsqu'un courant, amené par les prises 51G et 52G, traverse l'extrémité distale 58, celle-ci transforme une partie de l'énergie électrique ainsi reçue en chaleur qui se propage, par conduction thermique à travers l'extrémité proximale 56, jusqu'au guide d'onde 320. Ainsi, la chaufferette 322G permet de chauffer le guide d'onde 320 sans qu'aucun élément résistif ne soit implanté dans le guide d'onde 320 ou à proximité immédiate de ce guide d'onde. Le dispositif 300 permet d'ajuster lentement la phase du signal optique dans le guide d'onde 320. Par contre, il ne permet pas de faire varier rapidement la phase du signal optique.

A l'inverse, le modulateur 100 permet de modifier rapidement la phase du signal optique. A cet effet, il comporte deux électrodes 120 et 130. Ces électrodes 120 et 130 sont également visibles, en vue de dessus, sur la figure 2.

L'électrode 120 est réalisée dans le silicium monocristallin de la couche 3. Elle s'étend, dans la direction X, depuis une extrémité proximale 12 jusqu'à une extrémité distale 11 en passant par une partie intermédiaire amincie 13. Elle s'étend également dans la direction Y. Dans la direction Y sa section transversale reste constante. Parallèlement au plan XZ, les sections transversales des extrémités 11 et 12 et de la partie intermédiaire 13 sont chacune rectangulaire. Les extrémités 11, 12 et la partie intermédiaire 13 affleurent la face supérieure plane de la couche 3. Les extrémités 11, 12 et la partie intermédiaire 13 sont donc directement en contact avec la face inférieure de la couche 20.

La partie intermédiaire 13 raccorde mécaniquement et électriquement les extrémités 11 et 12 l'une à l'autre. Son épaisseur e₁₃ est choisie de manière à confiner latéralement (section X-Z) la distribution d'intensité du champ optique dans l'extrémité proximale 12. A cet effet, l'épaisseur e₁₃ est inférieure à 0,8e₁₂ et, de préférence inférieure à 0,5e₁₂ ou à 0,25e₁₂, où e₁₂ est l'épaisseur maximale de l'extrémité 12. L'épaisseur e₁₃ est typiquement aussi supérieure à 70 nm pour diminuer la résistance électrique entre les extrémités 11 et 12. Cette résistance est appelée « résistance d'accès ». A cet effet, l'épaisseur e₁₃ est souvent supérieure à 0,1e₁₂ ou 0,15e₁₂. Ici, l'épaisseur e₁₁ de l'extrémité distale 11 est égale à l'épaisseur e₁₂. Dans ce mode de réalisation l'épaisseur e₁₂ est égale à 300 nm et l'épaisseur e₁₃ est égale à 150 nm ou 100 nm. La face inférieure horizontale de la partie intermédiaire 13 est séparée du substrat 44 uniquement par le matériau diélectrique 116.

Ici, l'extrémité distale 11 est plus dopée que l'extrémité proximale 12. Par exemple, la concentration de dopant dans l'extrémité 11 est comprise entre 10¹⁷ et 2 x 10¹⁹ atomes/cm³. La concentration de dopant dans l'extrémité 12 est par exemple comprise entre 10¹⁷ et 2 x 10¹⁸ atomes/cm³.

L'électrode 130 est réalisée en matériau semi-conducteur dopé avec un dopage de signe opposé à celui de l'électrode 120. Ici, elle est réalisée en InP dans la sous-couche 30. La concentration en dopant de l'électrode 130 est comprise, par exemple, entre 10¹⁷ et 2 x 10¹⁸ atomes/cm³ ou entre 10¹⁷ et 5 x 10¹⁸ atomes/cm³.

L'électrode 130 s'étend, parallèlement à la direction X, depuis une extrémité proximale 32 jusqu'à une extrémité distale 31. L'électrode 130 s'étend également dans la direction Y. Elle est directement située sur la couche 20. Parallèlement au plan XZ, sa section transversale est rectangulaire. Dans la direction Y, cette section transversale est constante.

L'extrémité proximale 32 est située en vis-à-vis de l'extrémité proximale 12 et s'étend au-delà de cette extrémité 12, dans la direction X, de manière à présenter un dépassement 32d (Figure 3) en vis-à-vis de la partie intermédiaire 13. Typiquement, le dépassement 32d fait au moins 5 nm ou 10 nm ou 25 nm de long dans la direction X. L'extrémité proximale 32 est séparée de l'extrémité proximale 12 et de la partie intermédiaire 13 uniquement par une portion de la couche 20 interposée entre ces extrémités proximales.

Par rapport à un plan vertical parallèle aux directions Y et Z et passant par les extrémités 12 et 32, l'extrémité distale 31 est située d'un côté de ce plan tandis que l'extrémité distale 11 est située de l'autre côté. Les extrémités 11 et 31 ne sont donc pas en vis-à-vis.

Dans le mode de réalisation de la figure 1 et les suivants, la zone 34, qui s'étend verticalement depuis l'extrémité 31 jusqu'au substrat 44, comporte uniquement des matériaux diélectriques solides. Ici, il s'agit des matériaux diélectriques 116 et de la couche 20. Sur la figure 1, la zone 34 a été mise en évidence en la remplissant avec des cercles. Toutefois, il n'existe pas de discontinuité entre les matériaux diélectriques situés à l'intérieur de la zone 34 et ceux situés à l'extérieur de cette zone 34.

La superposition, dans la direction Z, de l'extrémité 12, d'une portion de la couche 20 et de l'extrémité 32 est dimensionnée pour former un guide d'onde 70, capable de guider, dans la direction Y, le signal optique généré par la source laser 7. Les guides d'onde 70 et 320 sont par exemple raccordés optiquement l'un à l'autre par un coupleur adiabatique non représenté ici.

L'épaisseur maximale des extrémités proximales 12 et 32 est choisie pour que le point M, où se situe le maximum d'intensité du champ optique du signal optique qui se propage dans le guide d'onde 70, soit le plus près possible de la couche 20. De préférence, le point M est situé au centre de la portion de cette couche 20 interposée entre les extrémités 12 et 32. En effet, c'est au niveau des interfaces entre les extrémités 12, 32 et la couche 20 que la densité de porteurs de charges est maximale lorsqu'une différence de potentiels est présente entre ces extrémités proximales. Ainsi, en plaçant le point M à cet endroit, l'efficacité du modulateur 100 est améliorée. L'épaisseur maximale e₃₂ de l'extrémité proximale 32 est généralement comprise entre 50 nm et 300 nm. Dans ce mode de réalisation, les indices de réfraction des extrémités 12 et 32 sont proches l'un de l'autre. Par conséquent, les épaisseurs maximales des extrémités 12 et 32 sont choisies sensiblement égales pour que le point M soit situé à l'intérieur de la couche 20. Par exemple, l'épaisseur maximale e₁₂ de l'extrémité proximale 12 est comprise entre 0,5e₃₂ et 1,5e₃₂, et, de préférence, entre 0,7e₃₂ et 1,3e₃₂. Ici, les épaisseurs e₁₂ et e₃₂ sont choisies égales chacune à 300 nm.

La partie intermédiaire 13 permet un meilleur contrôle de la position du point M dans la direction X et limite donc la dispersion des performances des modulateurs 100 lors de leur fabrication. Plus précisément, la position du point M dans la direction X est essentiellement fixée par la largeur W₁₂ (Figure 3) de l'extrémité proximale 12 dans la direction X. En effet, la faible épaisseur e₁₃ de la partie intermédiaire 13 confine le signal optique à l'intérieur de l'extrémité 12. La largeur W₁₂ est, par gravure, définie à +/- δ près, où δ est une erreur égale, typiquement, à +/- 5 nm , ou +/-10 nm. A l'inverse, si la partie intermédiaire 13 a la même épaisseur que l'extrémité 12, la largeur W₁₂ est définie par la largeur du recouvrement des électrodes 130 et 120. Or le positionnement de l'électrode 130 se fait quant à lui par alignement lithographique, avec une précision δal typiquement égale à +/-25 nm, ou +/-50 nm. Donc, en absence de partie intermédiaire amincie, l'erreur sur la largeur W₁₂ est +/- δal et la dispersion des performance des modulateurs 100 est plus importante. Cette conformation de l'électrode 120 permet donc d'être moins sensible aux erreurs de positionnement de l'électrode 130. En particulier, l'efficacité de modulation dépend directement de la largeur W₁₂. Par conséquent, l'efficacité de modulation est moins dispersée grâce à la partie intermédiaire 13 et au dépassement 32d.

Par ailleurs, ce mode de réalisation permet aussi un meilleur contrôle de la capacité du modulateur.

Le modulateur 100 comporte aussi deux prises de contact 21 et 22, en contact mécanique et électrique directement avec, respectivement, les extrémités distales 11 et 31. Ces prises 21 et 22 sont raccordées à une source de tension commandable en fonction du bit ou des bits d'information à transmettre par le transmetteur 5.

Un fonctionnement possible du transmetteur 5 est le suivant. La source laser 7 génère un signal optique. Au moins, une partie de ce signal optique est dirigée vers un interféromètre de Mach Zehnder dont au moins l'une des branches comporte successivement le modulateur 100 et le dispositif d'accord de phase 300. Cette partie de signal optique est donc successivement guidée par le guide d'onde 70 puis le guide d'onde 320 avant d'être recombinée avec une autre partie du signal optique guidée par l'autre branche de l'interféromètre de Mach Zehnder pour former le signal optique modulé. Par exemple, les guides d'ondes 70 et 320 sont optiquement couplés l'un à l'autre par un coupleur adiabatique. A la sortie de l'interféromètre de Mach Zehnder, le champ optique peut être couplé à une fibre optique par l'intermédiaire d'un guide d'onde similaire au guide d'onde 320, puis par le coupleur surfacique 8.

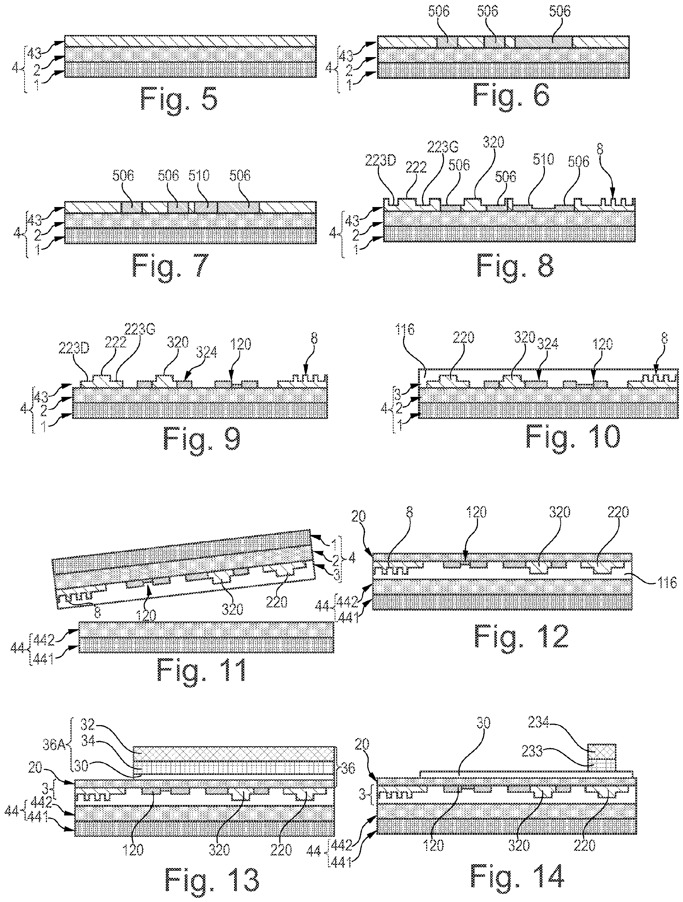

Un procédé de fabrication du transmetteur 100 va maintenant être décrit en référence aux figures 4 à 16. Les figures 5 à 16 représentent différents états de fabrication du transmetteur 5 en coupe verticale parallèlement aux directions X et Z.

Lors d'une étape 500, le procédé débute par la fourniture d'un substrat 4 (Figure 5). Ici, ce substrat 4 est un substrat SOI (« silicon on insulator »). Le substrat 4 comporte directement empilés les uns au-dessus des autres dans la direction Z :
- un support 1 en silicium, d'épaisseur supérieur à 400 µm ou 700 µm classiquement,
- une couche 2 enterrée en dioxyde de silicium thermique d'épaisseur e₂ᵢₙᵢ, et
- une couche 43 en silicium monocristallin qui, à ce stade, n'a pas encore été gravée ni encapsulée dans un matériau diélectrique.

Le dioxyde de silicium thermique est un oxyde de silicium obtenu par oxydation du support 1 à une température élevée, c'est-à-dire supérieure à 650°C ou 800°C. Grâce à la nature de cet oxyde, la couche 2 présente deux propriétés remarquables :
1) son épaisseur, même lorsqu'elle est faible, reste homogène, et
2) elle permet d'obtenir un collage direct de meilleure qualité.

L'épaisseur « homogène » de la couche 2 signifie qu'en tout point de la couche 2 son épaisseur est comprise entre e₂ᵢₙᵢ -err₂ᵢₙᵢ nm et e₂ᵢₙᵢ +err₂ᵢₙᵢ nm, où :
- e₂ᵢₙᵢ est une constante, typiquement égale à l'épaisseur moyenne de la couche 2, et
- err₂ᵢₙᵢ est une constante inférieure ou égale à 5 nm et, de préférence, égale à 3 nm ou 1 nm.

Le collage direct est plus connu sous le terme anglais de « direct bonding ». Il s'agit d'un procédé de collage dans lequel deux galettes ou « wafer » en anglais, sont collées directement l'une sur l'autre sans ajouter une couche intermédiaire de colle. Le collage résulte de l'apparition de liaisons chimiques directement entre les deux faces de ces galettes. Généralement, après avoir été mise en contact mécanique l'une avec l'autre, les galettes subissent un traitement thermique pour renforcer le collage.

Généralement, l'épaisseur e₂ᵢₙᵢ est supérieure à 7 nm ou 10 nm et, typiquement, inférieure à 100 nm ou 50 nm. Ici, l'épaisseur initiale e₂ᵢₙᵢ de la couche 2 est égale à 20 nm à +/-1 nm et l'épaisseur de la couche 43 est égale à 500 nm. Une telle épaisseur e₂ᵢₙᵢ et une telle précision sur l'épaisseur de la couche 2 est obtenue par les procédés conventionnels de fabrication de substrats SOI.

Lors d'une étape 502, on procède à un dopage localisé de la couche 43. Ici, on procède d'abord à une première opération 504 de dopage localisée, lors de laquelle des régions dopées 506 (figure 6) de même dopage sont réalisées dans la couche 43. Ces régions 506 sont uniquement réalisées aux emplacements des futurs bras du dispositif d'accord 300 et de l'électrode 120 du modulateur 100. Ces régions 506 présentent un dopage égal à celui de l'extrémité distale 58 et de l'extrémité proximale 12.

Ensuite, une seconde opération 508 de dopage de la couche 43 est réalisée de manière à obtenir une région 510 (figure 7) plus fortement dopée que les régions 506. La région 510 est ici partiellement superposée à l'une des régions 506. Par exemple, la région 510 est obtenue en appliquant une nouvelle implantation sur une partie d'une des régions 506. La région 510 est réalisée à l'emplacement de la future extrémité distale 11 de l'électrode 120. Le dopage de la région 510 est ici égal au dopage de l'extrémité distale 11.

Lors d'une étape 514, la couche 43 subit une première gravure localisée partielle (figure 8) pour amincir l'épaisseur du silicium aux emplacements de l'électrode 120 et des bras 324 des chaufferettes 322G et 322D. A l'issue de l'étape 514, les régions 506 et 510 sont amincies et présentent une épaisseur inférieure à l'épaisseur initiale de la couche 43. Ici, l'épaisseur des régions 506 et 510 amincie est égale à l'épaisseur de l'électrode 120 et des bras 324, c'est-à-dire 300 nm.

Lors de cette première gravure localisée partielle, l'épaisseur de la couche 43 est également amincie dans des régions non dopées, par exemple, pour former les motifs du futur coupleur surfacique 8 et les bras latéraux 223G et 223D du guide d'onde 220. A l'inverse, lors de cette étape 514, d'autres régions dite « non-amincies », ne sont pas gravées et conservent leur épaisseur initiale. En particulier, ces régions non-amincies sont situées à l'emplacement de la nervure 222 du guide d'onde 220 et à l'emplacement du guide d'onde 320.

Toujours lors de cette étape 514, la couche 43 subit ensuite une deuxième gravure localisée partielle pour amincir l'épaisseur du silicium seulement à l'emplacement de la future partie intermédiaire 13. A l'issue de cette deuxième gravure localisée partielle, l'épaisseur de la couche 43 à l'emplacement de la future partie intermédiaire 13 est de 150 nm.

Lors d'une étape 516, une gravure totale localisée de la couche 43 est réalisée (figure 9). Contrairement à la gravure partielle, la gravure totale élimine complètement l'épaisseur de silicium de la couche 43 dans les régions non masquées où elle est appliquée. A l'inverse, des régions masquées protègent la couche 43 de cette gravure totale. Cette gravure totale est réalisée de manière à structurer, simultanément dans la couche 43, les guides d'onde 220 et 320, les bras du dispositif d'accord 300, le coupleur surfacique 8 et l'électrode 120. A cet effet, seules les régions correspondant à ces différents éléments sont masquées. On obtient à l'issue de cette étape, l'état représenté sur la figure 9.

Lors d'une étape 518, la couche 43 de silicium monocristallin, qui a été structurée lors des étapes précédentes, est encapsulée dans du dioxyde de silicium 116 (figure 10). On obtient alors la couche 3 comportant du silicium monocristallin structuré encapsulé dans le matériau diélectrique 116. La face supérieure du matériau 116 est ensuite préparée pour un collage, par exemple direct oumoléculaire. Par exemple, la face supérieure du matériau 116 est polie à l'aide d'un procédé tel qu'un procédé de CMP (Chemical-Mechanical Polishing).

Lors d'une étape 520, la face supérieure du substrat 4, c'est-à-dire à ce stade la face polie du matériau 116, est ensuite collée sur la face extérieure du substrat 44 (figure 11), par exemple, par collage direct ou moléculaire. Le substrat 44 a déjà été décrit en référence à la figure 1.

Lors d'une étape 522 (figure 12), le support 1 est retiré pour mettre à nue une face de la couche 2 et cela sans modifier substantiellement l'épaisseur initiale e₂ᵢₙᵢ de la couche 2. Pour cela, le support 1 est éliminé par deux opérations successives. Une première opération d'élimination grossière de la majorité de l'épaisseur du support 1 pour ne laisser subsister qu'une fine couche résiduelle du support 1 sur la couche 2. Typiquement, à l'issue de la première opération, l'épaisseur de cette couche résiduelle est inférieure à 40 µm ou 30 µm. Cette première opération est dite « grossière » car la précision sur l'épaisseur de la fine couche résiduelle est grossière, c'est-à-dire supérieure à ± 0,5 µm ou ± 1 µm mais, généralement, quand même inférieure à ± 4 µm et, de préférence, inférieure à ± 3 µm. Étant donné que la précision requise sur l'épaisseur de la fine couche résiduelle est grossière, un procédé d'élimination rapide ou peu coûteux peut être utilisé. Typiquement, l'opération d'élimination grossière est une opération d'amincissement du support 1 par polissage mécanique. Ici, à la fin de cette première opération, la fine couche résiduelle fait 20 µm d'épaisseur à ± 2 µm près.

Ensuite, une deuxième opération de finition est mise en œuvre pour éliminer totalement la fine couche résiduelle du support 1 sans modifier l'épaisseur de la couche 2. Typiquement, la deuxième opération est une opération de gravure chimique très sélective. Par « très sélective » on désigne le fait que l'agent chimique utilisé lors de cette opération grave au moins 500 fois et, de préférence au moins 1000 ou 2000 fois, plus rapidement le support 1 que la couche 2. Ici, l'agent chimique utilisé est le TMAH (Tetramethylammonium hydroxide). Le TMAH grave 2000 fois plus vite le silicium que l'oxyde de silicium thermique. Dans ce mode de réalisation, pour être sûr de retirer la totalité de la fine couche résiduelle, la gravure très sélective est adaptée pour graver 22 µm de silicium soit 2 µm en plus que l'épaisseur théorique de la fine couche résiduelle. Ce choix conduit, dans le pire des cas, à une sur-gravure de 2 nm (= 2 µm/2000) de l'épaisseur de la couche 2. En effet, puisque l'épaisseur de la fine couche résiduelle est de 20 µm ± 2 µm, cela veut dire que par endroit l'épaisseur peut être de 18 µm. Si l'on prévoit de graver 22 µm, alors la sur-gravure à l'endroit au l'épaisseur est de 18 µm peut atteindre 4 µm. Donc la sur-gravure de couche 2 à cet endroit est de 2 nm. Ainsi, à l'issue de l'étape 522 la couche 2 est mise à nue et forme la couche 20. Son épaisseur est égale à 20 nm à ± 3 nm, c'est à dire ± 1 nm dus à l'imprécision sur l'épaisseur initiale e₂ᵢₙᵢ de la couche 2 auquel s'ajoute l'imprécision de ± 2 nm due à la sur-gravure. Par rapport à d'autre procédé d'obtention d'une couche fine, celui-ci présente l'avantage d'obtenir une couche fine dont l'épaisseur est beaucoup plus homogène. En effet, lorsque la couche fine est obtenue par amincissement d'une couche d'oxyde plus épaisse ou par croissance d'une fine couche d'oxyde sur une face d'une couche structurée encapsulée (voir par exemple WO2011037686 ou US2015055910), l'épaisseur est beaucoup moins homogène. Typiquement, avec les procédés connus, l'épaisseur de la couche d'oxyde est maîtrisée, au mieux, à ± 10 nm ou ± 20 nm près.

A cause de cela, la dispersion des performances des modulateurs fabriqués selon ce procédé est beaucoup plus faible que celle obtenue avec les procédés connus.

Enfin, avantageusement, des puits de dégazage sont creusés dans la couche 20 en dehors des emplacements où doivent être réalisés l'électrode 130 et la bande 33. Typiquement, ces puits traversent verticalement de part en part la couche 20. Ils ont pour fonction d'emprisonner les éléments gazeux générés lors du collage direct d'une couche sur la couche 20. Ainsi, ces puits permettent d'obtenir un collage de meilleure qualité sur la couche 20. Pour simplifier les figures, ces puits n'ont pas été représentés sur ces figures.

On obtient, à l'issue de l'étape 522, un empilement du substrat 44 et des couches 3 et 20 (Figure 12).

Lors d'une étape 524, une couche 36A (figure 13) en matériau à gain III-V est réalisée sur la couche 20. Par exemple, la couche 36A est collée sur la couche 20 au-dessus du guide d'onde 220 et de l'électrode 120. La couche 36A comporte la sous-couche 30 en InP dopée avec un dopage de signe opposé à celui de l'électrode 120, l'empilement 34 et la sous-couche 35.

Lors d'une étape 526, une gravure localisée (figure 14) de la sous-couche 35 et de l'empilement 34 est réalisée pour structurer la bande 234 dans la sous-couche 35 et l'empilement 233 dans l'empilement 34. Lors de cette étape, la sous-couche 30 n'est pas gravée.

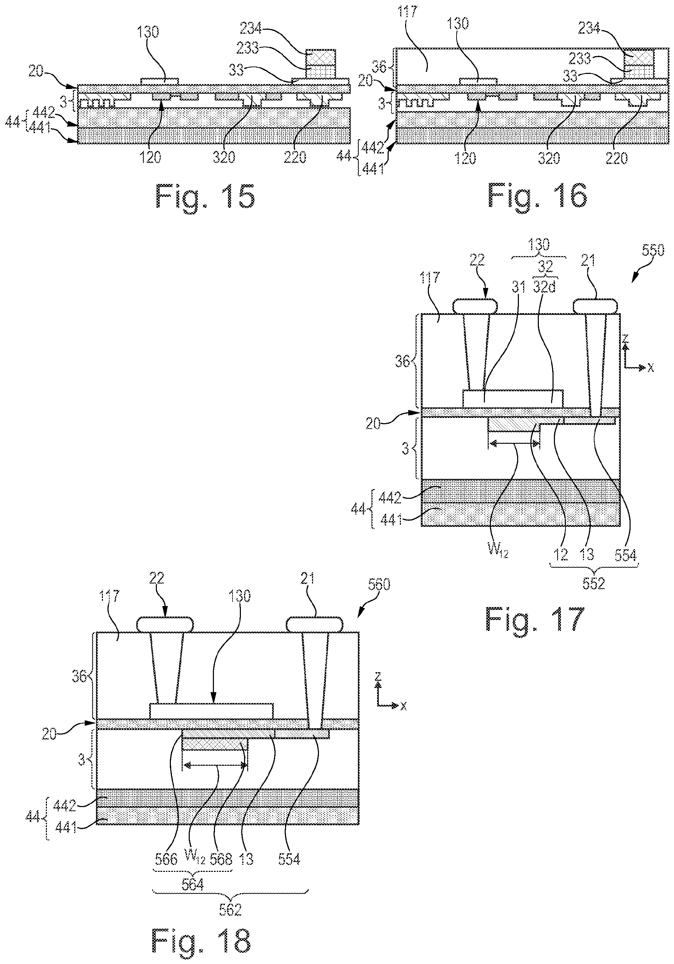

Lors d'une étape 528, une gravure totale localisée (figure 15) de la sous-couche 30 est réalisée pour structurer simultanément la bande 33 et l'électrode 130 dans cette sous-couche. La précision δal du positionnement de l'électrode 130 par rapport à l'électrode 120 dépend des machines et techniques utilisées pour réaliser cette étape. Cette précision δal est donc connue à l'avance. La longueur du dépassement 32d de l'électrode 130 dépend de cette précision δal. Ici, la position souhaitée de l'électrode 130 est choisi de manière à ce que la longueur cible de ce dépassement 32d soit supérieure ou égale à la valeur absolue de la précision δal. Ainsi, quelle que soit l'erreur de positionnement qui se produit lors de la fabrication du modulateur 100, le dépassement 32d est systématiquement créé tant que l'erreur d'alignement reste dans la plage prévisible ± δal.

Lors de l'étape 528, une partie ou la totalité de l'épaisseur de la couche 20 située entre l'électrode 130 et la bande 33 peut être éliminée. Toutefois, cela n'a aucune conséquence sur l'épaisseur des portions de la couche 20 interposées entre les électrodes 120 et 130 et entre le guide d'onde 220 et la bande 33.

Lors d'une étape 530, la couche 36A structurée est encapsulée (figure 16) dans le matériau diélectrique 117. On obtient alors la couche 36 comportant le matériau à gain III-V encapsulé dans le matériau diélectrique 117.

Enfin, lors d'une étape 532, les prises de contact 21, 22, 51G, 52G, 51D, 52D, 243G et 243D sont réalisées. On obtient alors le transmetteur 5 tel que représenté sur la figure 1.

Ce procédé de fabrication présente de nombreux avantages. En particulier :
- Il permet de contrôler précisément l'épaisseur de la couche 20 et d'obtenir une couche 20 particulièrement plane car elle est réalisée du coté de la couche 3 qui a le même niveau partout, ce qui simplifie le collage de la couche 36A.
- Il permet de régler l'épaisseur de l'électrode 120 indépendamment de l'épaisseur du guide d'onde 220 et, plus généralement, indépendamment de l'épaisseur de la couche 43 en silicium monocristallin. Ceci est particulièrement utile car, généralement, pour améliorer le fonctionnement de la source laser 7, il faut que l'épaisseur du guide d'onde 220 soit assez grande, c'est-à-dire ici de l'ordre de 500 nm et que l'épaisseur de la bande 33 soit assez fine, c'est-à-dire ici de l'ordre de 300 nm ou 150 nm. A l'inverse, pour améliorer le fonctionnement du modulateur 100, comme expliqué ci-dessus, l'épaisseur de l'électrode 120 et, en particulier de son extrémité proximale 12, doit être choisie en fonction de l'épaisseur de l'extrémité proximale 32. Ici, l'épaisseur de l'extrémité proximale 32 est imposée par l'épaisseur de la sous-couche 30 en InP cristallin. Elle est donc de 300 nm ou 150nm.
- Ce procédé ne complexifie pas la fabrication du transmetteur 5. Par exemple, il permet de réaliser en une seule et même opération de gravure, la bande 33 du guide d'onde 200 et l'électrode 130 du modulateur 100. De même, l'électrode 120 et le guide d'onde 220 sont fabriqués simultanément lors de la même opération de gravure.

La figure 17 représente un modulateur 550 apte à remplacer le modulateur 100. Le modulateur 550 est identique au modulateur 100 sauf que l'électrode 120 est remplacée par une électrode 552. L'électrode 552 est identique à l'électrode 120 sauf que l'extrémité distale 11 est remplacée par une extrémité distale 554 dont l'épaisseur est égale à l'épaisseur e₁₃ de la partie intermédiaire 13. Ainsi, l'extrémité distale 554 et la partie intermédiaire 13 sont dans le prolongement l'un de l'autre et ne forment qu'une seule plaque de section transversale rectangulaire.

La figure 18 représente un modulateur 560 apte à remplacer le modulateur 100. Le modulateur 560 est identique au modulateur 550 sauf que l'électrode 552 est remplacée par une électrode 562. L'électrode 562 est identique à l'électrode 552 sauf que l'extrémité proximale 12 est remplacée par une extrémité proximale 564. L'extrémité proximale 564 est identique à l'extrémité proximale 12 sauf qu'elle comporte une région 566 plus dopée et une région 568 moins dopée empilées l'une au-dessus de l'autre dans la direction Z. La région 566 est directement en contact avec la couche 20. La région 568 se situe du côté opposé à la couche 20. Le dopage de la région 566 est le même que celui décrit pour l'extrémité proximale 12 de manière à conserver la même efficacité de modulation. Par dopage de la région 566 ou 568, on désigne le densité volumique moyenne de dopants dans cette région. Pour limiter la résistance d'accès tout en limitant les pertes optiques à l'intérieur du guide d'onde, l'épaisseur e₅₆₆ de la région 566 est de préférence égale à l'épaisseur e₁₃ de la partie intermédiaire 13 à ± 10 % près ou ± 5 % près. Son épaisseur est aussi généralement supérieure à 70 nm. Ici, son épaisseur est égale à l'épaisseur e₁₃.

Le dopage de la région 568 est au moins deux fois inférieur, et de préférence 4 ou 10 fois inférieur, au dopage de la région 566. Typiquement, la région 568 n'est pas dopée ou très peu dopée.

L'épaisseur de la région 568 est égale à e₁₂ - e₅₆₆. Cet agencement du dopage de l'extrémité proximale 564 permet de réduire les pertes de propagation dans le modulateur 560 sans en modifier sensiblement les autres performances telles que l'efficacité de modulation et la rapidité de modulation. Cela ne modifie pas non plus la résistance d'accès à l'extrémité proximale 564. Un tel agencement du dopage de l'extrémité proximale 564 est, par exemple, réalisé lors de l'étape 502, c'est-à-dire en réalisant un dopage à l'emplacement de l'électrode proximale 564 dans la couche 43 de silicium tel que seule la région 566 soit dopée. Par exemple, les régions 566 et 568 sont obtenues en jouant sur l'énergie d'implantation du dopant et sur la dose de dopant implantée pour ajuster à la fois la densité de dopants et la profondeur à laquelle se situe la densité maximale de dopants.

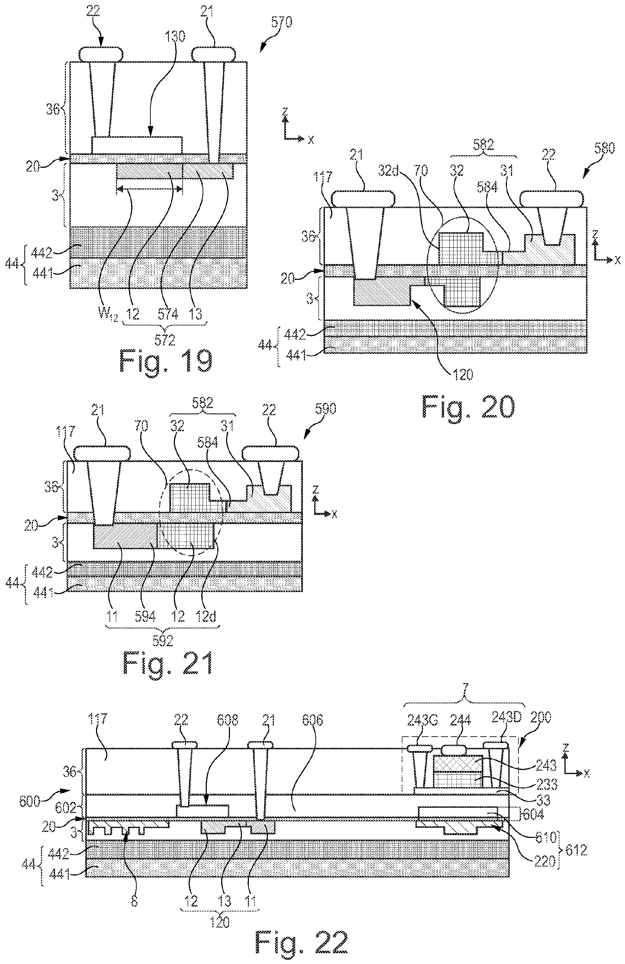

La figure 19 représente un modulateur 570 apte à remplacer le modulateur 100. Le modulateur 570 est identique au modulateur 100 sauf que l'électrode 120 est remplacée par une électrode 572. L'électrode 572 est identique à l'électrode 120 sauf que la partie intermédiaire 13 est remplacée par une partie intermédiaire 574. L'épaisseur de la partie intermédiaire 574 est égale à l'épaisseur e₁₂. Dans ce mode de réalisation, l'homogénéisation des performances du modulateur 570 est donc uniquement obtenue grâce au meilleur contrôle de l'épaisseur de la couche 20.

La figure 20 représente un modulateur 580 apte à remplacer le modulateur 100. Ce modulateur 580 est identique au modulateur 100 sauf que l'électrode 130 est remplacée par une électrode 582. L'électrode 582 est identique à l'électrode 130 sauf qu'une partie intermédiaire amincie 584 est introduite entre les extrémités proximale 32 et distale 31. La partie intermédiaire 584 est, par exemple, structurellement identique à la partie intermédiaire 13.

De plus, dans ce mode de réalisation, l'extrémité proximale 32 est moins dopée que l'extrémité distale 31. Un tel dopage différent entre les extrémités 31 et 32 peut être obtenu en procédant à une étape de dopage localisé sur l'extrémité 31 juste après l'étape 528 et avant l'étape 530.

Dans ce mode de réalisation, comme dans les modes de réalisation précédents, l'extrémité distale 32 comporte le dépassement 32d qui se situe au-dessus de la partie intermédiaire 13 de l'électrode 120. Dans ces conditions, la position du maximum d'intensité du champ optique dans la direction X est toujours contrôlée par la largeur W₁₂ de l'extrémité proximale 12.

La figure 21 représente un modulateur 590 apte à remplacer le modulateur 100. Le modulateur 590 est identique au modulateur 580 sauf que l'électrode 120 est remplacée par une électrode 592. L'électrode 592 est identique à l'électrode 572 du modulateur 570. L'électrode 592 présente un dépassement 12d qui s'étend, dans la direction X, au-dessous de la partie intermédiaire 584. Ce dépassement 12d est conformé comme le dépassement 32d. Ainsi, dans ce mode de réalisation, la position du maximum d'intensité du champ optique guidé par le modulateur est contrôlée par la largeur W₃₂ de l'électrode proximale 32 et non plus par la largeur de l'extrémité proximale 12. Cela procure les mêmes avantages en termes d'homogénéisation des performances des modulateurs fabriqués que ce qui a déjà été expliqué dans le cas du mode de réalisation de la figure 1 et de l'extrémité proximale 12.

Le procédé de fabrication du modulateur 590 est par exemple identique à celui de la figure 4 sauf que :
- lors de l'étape 514, la deuxième gravure partielle localisée destinée à amincir la partie intermédiaire 13 est omise, et
- lors de l'étape 528, une deuxième gravure partielle localisée apte à amincir la partie intermédiaire 584 est mise en œuvre en plus de la gravure totale localisée.

La figure 22 représente un transmetteur 600 identique au transmetteur 5 sauf qu'une couche semi-conductrice encapsulée 602 est interposée entre la couche 20 et la couche 36. La couche 602 comporte une couche semi-conductrice structurée 604 encapsulée dans de l'oxyde de silicium. La couche 604 est directement en contact avec la couche 20. Ici, la couche 604 est une couche de silicium polycristallin. Cette couche est structurée, par exemple par des gravures totales localisées telles que celles précédemment décrites, pour former une électrode 608 du modulateur et une nervure 610 de la source laser. L'électrode 608 est par exemple identique à l'électrode 130 sauf qu'elle est réalisée en silicium polycristallin. L'électrode 608 est dopée par implantation après gravure. La nervure 610 n'est pas dopée.

La nervure 610 est située au-dessus du guide d'onde 220 et couplée optiquement à ce guide d'onde 220 à travers la couche 20 pour former un guide d'onde bi-matière 612. Ici, le guide d'onde bi-matière 612 est formé de silicium monocristallin et de silicium polycristallin.

Le guide d'onde 200 en matériau III-V est directement déposé ou collé sur la couche 602 au-dessus du guide d'onde bi-matière 612 et couplé optiquement à ce guide d'onde 612. Dans ce mode de réalisation, l'électrode 608 n'est pas réalisée dans le même matériau que celui de la bande 33 du guide d'onde 200.

### Variantes du modulateur :

Le modulateur 100 peut être un modulateur en anneau. A cet effet, le guide d'onde 70 se referme sur lui-même pour former un guide d'onde annulaire dans lequel la densité des porteurs de charge peut être modifiée en fonction de la différence de potentiels appliquée entre les prises 21 et 22. Typiquement, ce guide d'onde annulaire est raccordé à un guide d'onde dans lequel se propage le signal optique à moduler par un couplage évanescent. Dans ce cas, le dispositif d'accord 300 de phase peut être omis. Le guide d'onde 70 peut aussi constituer uniquement une portion limitée du guide d'onde annulaire.

Dans un autre mode de réalisation, le modulateur est utilisé pour moduler l'intensité du signal optique qui le traverse. En effet, une modification de la densité des porteurs de charge dans le guide d'onde 70 modifie également l'intensité du signal optique qui le traverse.

En variante, l'épaisseur de l'extrémité 11 est égale à l'épaisseur de la couche 43 en silicium monocristallin. En effet, pour centrer le point M, où se situe le maximum de l'intensité du champ optique du signal optique, au centre de la couche 20, c'est l'épaisseur des extrémités 12 et 32 qui est importante. L'épaisseur des extrémités distales 11 et 31 n'a pas d'importance notable sur ce point.

L'épaisseur de la couche 20 peut être supérieure à 25 nm ou 40 nm.

De façon similaire à ce qui été décrit pour l'extrémité proximale 564, l'extrémité proximale 32 de l'électrode 130 peut être remplacée par une extrémité avec une région plus dopée qu'une autre. Dans une autre variante, seule l'extrémité 32 comporte deux régions de dopages différents et le dopage de l'extrémité 12 est uniforme.

D'autres modes de réalisation des régions 566 et 568 de dopage différent sont possibles. Par exemple, dans une variante, le dopage de l'extrémité proximale 564 diminue progressivement au fur et à mesure que l'on s'éloigne de la couche 20. On crée ainsi un gradient de dopage. Il n'existe alors pas de modification franche de la densité volumique de dopants lorsque l'on passe de la région 566 à la région 568. Par contre, la densité volumique moyenne de dopants dans la région 566 reste très supérieure à la densité volumique moyenne de dopants dans la région 568.

La région dopée de l'électrode 120 peut s'étendre au-delà de l'extrémité proximale 32 dans la direction X ou en-deçà.

En variante, la largeur W₃₂ de l'extrémité proximale 32 du modulateur 580 est plus petite que la largeur W₁₂ de l'extrémité proximale 12. Dans ce cas, la position du maximum d'intensité du champ optique à l'intérieur du guide d'onde 70 est contrôlée par la largeur W₃₂ et non plus par la largeur W₁₂.

Dans une autre variante, le dépassement 32d ou 12d est omis. En effet, la reproductibilité du positionnement du point M est améliorée même en absence de ce dépassement 32d ou 12d.

D'autres matériaux semi-conducteurs sont possibles pour réaliser l'électrode 120 ou 130. Par exemple, les deux électrodes sont réalisées en InP ou en silicium polycristallin ou monocristallin.

D'autres matériaux diélectriques sont possibles pour le matériau 116 et la couche 20. Par exemple, il peut s'agir de nitrure de silicium, de nitrure d'Aluminium, d'un polymère électriquement isolant, de Al₂O₃. De plus, dans le cas de la couche 20, son indice de réfraction n'est pas nécessairement inférieur à celui du silicium.

Dans un autre mode de réalisation, l'électrode 130 est réalisée dans un matériau semi-conducteur différent de celui utilisé pour réaliser la bande 33. Dans ce cas, l'électrode 130 et la bande 33 ne sont pas structurées dans une même sous-couche en matériau III-V.

Quel que soit le mode de réalisation, il est possible d'intervertir les régions dopées N et P.

### Variantes de la source laser :

D'autres matériaux à gain III-V sont possibles pour réaliser la couche 36. Par exemple, la couche 36 est formée de l'empilement suivant en allant du bas vers le haut :
- une sous-couche inférieure en GaAs dopée N,
- des sous-couches à boites quantiques en AIGaAs , ou des puits quantiques AIGaAs, et
- une sous-couche supérieure en GaAs dopée P.

Le matériau III-V utilisé pour réaliser la sous-couche 30 peut être différent. Par exemple, il peut s'agir de AsGa dopée N ou P. On notera aussi que l'InP dopé P présente plus de perte optique que l'InP dopé N, et qu'il est donc préférable d'utiliser au niveau du modulateur pour l'électrode 130 de l'InP dopé N

Le guide d'onde 220 peut prendre une configuration dite « en bande » c'est-à-dire que les bras latéraux 223G et 223D sont omis ou tout autre configuration capable de guider un signal optique.

Dans une autre variante, la couche 20 est totalement éliminée là où elle n'est pas indispensable au fonctionnement du transmetteur. Par exemple, elle est totalement éliminée sauf entre les extrémités proximales 12 et 32.

### Variantes du procédé de fabrication :

Le retrait du support 1 peut être réalisé différemment. Par exemple, en variante, le support 1 est retiré en mettant en œuvre uniquement l'opération de finition sans mettre en œuvre l'opération d'élimination grossière. Dans une autre variante, l'élimination grossière est réalisée à l'aide d'une opération de gravure grossière différente de celle mise en œuvre lors de l'opération de finition.

Les puits de dégazage creusés dans la couche 20 peuvent être omis, notamment si la couche 20 est plus épaisse. En effet, si la couche 20 est plus épaisse alors l'utilisation de puits de dégazage est inutile.

En variante, l'électrode 130 et la bande 33 ne sont pas réalisées en même temps dans la même sous-couche 30. Par exemple, lors de l'étape 528, seul la bande 33 est structurée. Ensuite, une couche semi-conductrice est déposée ou collée sur la couche 20 à l'emplacement de la futur électrode 130. Ensuite, elle est gravée pour obtenir l'électrode 130. Dans ce cas, l'électrode 130 peut être réalisée dans un matériau différent de celui utilisé pour la bande 33 tel que du silicium cristallin.

L'ordre des étapes de gravures partielles et totales peut être inversé. Par exemple, un premier masque est disposé sur la couche 43 pour délimiter la périphérie de l'électrode 120, puis une gravure totale localisée est réalisée pour construire les flancs verticaux de cette électrode 120. Ensuite, une gravure partielle localisée est mise en œuvre pour amincir la partie intermédiaire 13 de l'électrode 120. Lors de cette gravure partielle localisée, un second masque recouvrant au moins l'extrémité proximale de l'électrode 120 est déposé. Ce second masque laisse la partie intermédiaire 13 à nu.

Dans une autre variante, la deuxième gravure totale localisée est remplacée par une gravure uniforme de toute la surface de la couche 3 pour transformer les régions non-amincies en régions amincies et éliminer complètement les régions amincies.

L'ordre des étapes de dopage et de gravure peut être inversé.

Le modulateur et la source laser peuvent être fabriqués indépendamment l'un de l'autre. Par exemple, les procédés de fabrication décrit ici peuvent être facilement adaptés pour fabriquer soit seulement un modulateur soit seulement une source laser.

### Autres variantes :

La couche 442 peut être réalisée dans d'autres matériaux que de l'oxyde de silicium. Par exemple, dans une variante avantageuse, la couche 442 est réalisée en nitrure d'aluminium (AIN) ce qui améliore la dissipation de la chaleur générée par la source laser 200 vers le substrat 441.

En variante, une partie ou la totalité des prises de contact sont réalisées, non pas à travers le matériau 117, mais à travers le substrat 44. Dans ce cas, par rapport à ce qui a été représenté sur les figures précédentes, une ou plusieurs prises de contact électrique émergent sous le substrat.

En variante, le guide d'onde 70, 220 ou 320 est incurvés. Dans ce cas, la conformation des différents éléments optiquement couplés à ces guides d'onde est adaptée au rayon de courbure de ces guides d'onde.

En variante, le dispositif d'accord de phase est omis ou réalisé différemment.

Le fait qu'une extrémité proximale plus épaisse que la partie intermédiaire rend le procédé de fabrication plus robuste vis-à-vis des erreurs de positionnement des électrodes peut aussi être exploité pour améliorer d'autres procédés de fabrication de modulateurs. En particulier, cela peut être mis en œuvre dans des procédés autres que ceux où la couche diélectrique est directement formée par la couche enterrée. En particulier, la réalisation d'une extrémité proximale plus épaisse que la partie intermédiaire peut aussi être mise en œuvre dans des procédés connus comme celui décrit dans les demandes WO 2011037686 ou US2015/0055910. Dans ce dernier cas, la partie intermédiaire est amincie lors de la structuration de l'électrode et avant qu'elle soit encapsulée dans de l'oxyde de silicium.

De même, le dopage plus important de la région 566 de l'extrémité proximale directement en contact avec la couche diélectrique 20 peut aussi être mis en œuvre indépendamment du fait que la couche diélectrique est directement formée par la couche enterrée. Par exemple, en variante, la couche 20 est d'abord supprimée lors de l'étape 522 puis une nouvelle couche diélectrique est déposée pour remplacer la couche 20 supprimée. Lors de l'étape 522, la couche 20 peut aussi être amincie de plus de 10 nm.

## Revendications

1. Procédé de fabrication d'un modulateur des pertes de propagation et de l'indice de propagation d'un signal optique guidé, ce procédé comportant :
- la fourniture (500) d'un empilement comportant successivement un support (1), une couche enterrée (2) en matériau diélectrique et une couche semi-conductrice (43), l'épaisseur en tout point de la couche enterrée (2) étant égale à e₂ᵢₙᵢ à plus ou moins 5 nm près, où e₂ᵢₙᵢ est une constante égale à l'épaisseur moyenne de la couche enterrée, puis
- la gravure (514, 516) de la couche semi-conductrice (43) pour structurer une première électrode (120) du modulateur dans cette couche semi-conductrice (43), cette première électrode (120) présentant une extrémité proximale (12), une extrémité distale (11) et une partie intermédiaire (13) qui s'étend, dans une direction transversale (X), depuis l'extrémité proximale (12) jusqu'à l'extrémité distale (11) pour relier mécaniquement et électriquement ces extrémités (11, 12), puis
- l'encapsulation (518) de la couche semi-conductrice (43) structurée, dans un matériau diélectrique (116) pour obtenir une couche semi-conductrice (3) encapsulée dans un matériau diélectrique dans laquelle le matériau diélectrique se prolonge, dans la direction transversale, jusqu'à toucher directement l'extrémité proximale de la première électrode, puis
- le collage (520) d'un substrat (44) sur la couche semi-conductrice (3) encapsulée, puis
- la réalisation (524, 528) d'une seconde électrode (130) du modulateur présentant une extrémité proximale (32) en vis-à-vis de l'extrémité proximale (12) de la première électrode (120), ces extrémités proximales (12, 32) étant uniquement séparées l'une de l'autre par une couche diélectrique (20) de manière à former un guide d'onde (70) apte à guider le signal optique à moduler,
**caractérisé en ce que** :
- après le collage du substrat (44) sur la couche semi-conductrice (3) encapsulée et avant la réalisation de la seconde électrode (130), le procédé comporte le retrait (522) du support (1) de manière à mettre à nue une face de la couche enterrée (2) sans modifier son épaisseur de plus de 5 nm, ce retrait (522) du support (1) comportant une opération de gravure sélective d'au moins une fine couche résiduelle du support (1) directement en contact avec la couche enterrée (2), en utilisant un agent chimique qui grave au moins 500 fois plus rapidement le support (1) que la couche enterrée (2), et
- la réalisation (524, 528) de la seconde électrode (130) est mise en œuvre directement sur cette face mise à nue de la couche enterrée (2) de sorte qu'une fois la seconde électrode (130) réalisée, c'est la couche enterrée (2) qui forme directement la couche diélectrique (20) interposée entre les extrémités proximales (12, 32) des électrodes.

2. Procédé selon la revendication 1, dans lequel :
- la fourniture (500) d'un empilement comporte la fourniture d'un empilement dans lequel :
• le support (1) est en silicium,
• la couche enterrée (2) est une couche d'oxyde de silicium thermique, c'est-à-dire obtenue par oxydation de la surface du support à une température supérieure à 700 °C, et
- l'étape de réalisation de la seconde électrode comporte :
• le collage direct (524) d'une couche (30) en matériau semi-conducteur sur la face mise à nu de la couche enterrée (2), puis
• la gravure localisée (528) de cette couche (30) en matériau semi-conducteur pour former la seconde électrode (130).

3. Procédé selon l'une quelconque des revendications précédentes, dans lequel :
- la gravure de la première électrode (120) comporte une gravure localisée (514) qui amincie la partie intermédiaire (13) de la première électrode sans amincir son extrémité proximale (12) de sorte que cette partie intermédiaire est moins épaisse que l'extrémité proximale de la première électrode, et
- la réalisation de la seconde électrode (130) comporte le positionnement de cette seconde électrode par rapport à l'extrémité proximale (12) de la première électrode de manière à ce que l'extrémité proximale (32) de la seconde électrode s'étende systématiquement, dans la direction transversale, de part et d'autre de l'extrémité proximale (12) de la première électrode.

4. Procédé selon l'une quelconque des revendications 1 à 2, dans lequel la réalisation (524, 528) de la seconde électrode comporte :
- une étape de gravure localisée qui amincie une partie intermédiaire (584) de la seconde électrode (582), cette partie intermédiaire (584) étant située entre ses extrémité distale (31) et proximale (32) de sorte que cette partie intermédiaire est moins épaisse que l'extrémité proximale (32) de la seconde électrode, et
- le positionnement de cette seconde électrode (582) par rapport à l'extrémité proximale (12) de la première électrode (592) de manière à ce que la première électrode (592) s'étende systématiquement, dans la direction transversale, de part et d'autre de l'extrémité proximale (32) de la seconde électrode (582).

5. Procédé selon l'une quelconque des revendications précédentes, dans lequel le procédé comporte le dopage localisé de la couche semi-conductrice (43) à l'emplacement de l'extrémité proximale (564) de la première (562) ou de la seconde électrode de manière à doper plus fortement une première région (566) de cette extrémité proximale directement en contact avec la couche diélectrique (20) qu'une seconde région (568) plus éloignée de la couche diélectrique (20), l'épaisseur de la première région (566) étant supérieure ou égale à 70 nm.

6. Procédé selon la revendication 1, dans lequel l'épaisseur de la couche enterrée (2) est inférieure ou égale à 25 nm ou 15 nm.

7. Procédé selon l'une quelconque des revendications précédentes, dans lequel :
- la gravure (514, 516) de la couche semi-conductrice (43) structure un premier guide d'onde (220) en même temps que la première électrode (120), puis
- le procédé comporte en plus la réalisation (524, 526, 528), sur la face mise à nu de la couche enterrée (2) et en vis-à-vis du premier guide d'onde (220), d'un second guide d'onde (200) en matériau III-V apte à amplifier un signal optique susceptible d'être modulé par le modulateur (100), ce second guide d'onde étant couplé au premier guide d'onde à travers la couche enterrée (2).

8. Procédé selon l'une quelconque des revendications précédentes, dans lequel la fourniture (500) d'un empilement comporte la fourniture d'un empilement dans lequel l'épaisseur e₂ᵢₙᵢ de la couche enterrée est supérieure à 7 nm et inférieure à 100 nm.

9. Modulateur (100 ; 550 ; 560 ; 570 ; 580 ; 590) des pertes de propagation et de l'indice de propagation d'un signal optique, fabriqué par un procédé de fabrication conforme à la revendication 1, ce modulateur comportant :
- un substrat (44) s'étendant principalement dans un plan appelé « plan du substrat »,
- une couche (3) semi-conductrice encapsulée dans un matériau diélectrique (116), cette couche semi-conductrice encapsulée comportant une face inférieure directement tournée vers le substrat (44) et une face supérieure tournée du côté opposé au substrat (44), cette couche (3) semi-conductrice encapsulée comportant aussi au moins une première électrode (120) du modulateur réalisée dans le matériau semi-conducteur, cette première électrode (120) s'étendant, le long d'une direction transversale parallèle au plan du substrat, depuis une extrémité proximale (12) jusqu'à une extrémité distale (11) en passant par une partie intermédiaire (13) et le matériau diélectrique se prolongeant, dans cette direction transversale, jusqu'à toucher directement l'extrémité proximale de la première électrode, les extrémités proximale (12) et distale (11) et la partie intermédiaire (13) affleurant la face supérieure de la couche (3) semi-conductrice encapsulée,
- une seconde électrode (130) en matériau semi-conducteur présentant un dopage de signe opposé à celui de la première électrode (120), cette seconde électrode s'étendant depuis une extrémité proximale (32) jusqu'à une extrémité distale (31) en passant par une partie intermédiaire, l'extrémité proximale (32) étant située en vis-à-vis de l'extrémité proximale (12) de la première électrode et l'extrémité distale (31) étant située du côté opposé à l'extrémité distale (11) de la première électrode par rapport à un plan perpendiculaire à la direction transversale et passant par les extrémités proximales,
- une couche diélectrique (20) interposée entre les extrémités proximales (12, 32) des première et seconde électrodes, la superposition des extrémités proximales (12, 32) et de la couche diélectrique (20) formant un guide d'onde (70) apte à guider le signal optique à moduler,
- des prises (21, 22) de contact directement en contact mécanique et électrique avec, respectivement, les extrémités distales (11, 31) des première et seconde électrodes pour raccorder électriquement ces électrodes à des potentiels électriques différents de manière à modifier la densité des porteurs de charge dans le guide d'onde, **caractérisé en ce que** l'extrémité proximale (12 ; 564) de la première électrode (120 ; 562) est plus épaisse que la partie intermédiaire (13) de cette première électrode (120 ; 562), l'épaisseur e₁₃ de la partie intermédiaire étant à cet effet inférieure à 0,8e₁₂, où e₁₂ est l'épaisseur maximale de l'extrémité proximale (12, 564).

10. Modulateur selon la revendication 9, dans lequel l'extrémité proximale (564) de la première (562) ou de la seconde électrode comporte une région (566), directement en contact avec la couche diélectrique (20), plus fortement dopée qu'une seconde région (568) de cette extrémité proximale (564) plus éloignée de la couche diélectrique (20).

11. Modulateur selon la revendication 10, dans lequel l'épaisseur de la première région (566) est supérieure ou égale à 70 nm.

12. Modulateur selon l'une quelconque des revendications 9 à 11, dans lequel la couche en matériau diélectrique est une couche d'oxyde thermique obtenue par oxydation d'un substrat à plus de 700 °C.

13. Modulateur selon l'une quelconque des revendications 9 à 12, dans lequel en tout point de la couche diélectrique (20), son épaisseur est égale à e₂ᵢₙᵢ à plus ou moins 10 nm près, où e₂ᵢₙᵢ est une constante égale à l'épaisseur moyenne de la couche diélectrique.

14. Modulateur selon l'une quelconque des revendications 9 à 13, dans lequel l'extrémité proximale (32) de la seconde électrodes (130) s'étend, sur une distance d'au moins 5 nm, dans la direction transversale de part et d'autre de l'extrémité proximale (12) de la première électrode.

## Patentansprüche

1. Verfahren zur Herstellung eines Modulators der Ausbreitungsverluste und des Ausbreitungsindex eines geführten optischen Signals, wobei dieses Verfahren umfasst:
- das Bereitstellen (500) eines Stapels, der nacheinander einen Träger (1), eine vergrabene Schicht (2) aus dielektrischem Material und eine Halbleiterschicht (43) umfasst, wobei die Dicke an jedem Punkt der vergrabenen Schicht (2) e₂ᵢₙᵢ auf plus oder minus 5 nm genau beträgt, wobei e₂ᵢₙᵢ eine Konstante gleich der durchschnittlichen Dicke der vergrabenen Schicht ist, dann
- das Ätzen (514, 516) der Halbleiterschicht (43), um eine erste Elektrode (120) des Modulators in dieser Halbleiterschicht (43) zu strukturieren, wobei diese erste Elektrode (120) ein proximales Ende (12), ein distales Ende (11) und einen Zwischenstück (13) aufweist, das sich in eine Querrichtung (X) vom proximalen Ende (12) bis zum distalen Ende (11) erstreckt, um diese Enden (11, 12) mechanisch und elektrisch zu verbinden, dann
- das Kapseln (518) der strukturierten Halbleiterschicht (43) in ein dielektrisches Material (116), um eine in ein dielektrisches Material gekapselte Halbleiterschicht (3) zu erhalten, in der sich das dielektrische Material in der Querrichtung fortsetzt, bis es das proximale Ende der ersten Elektrode direkt berührt, dann
- das Kleben (520) eines Substrats (44) auf die gekapselte Halbleiterschicht (3), dann
- das Ausführen (524, 528) einer zweiten Elektrode (130) des Modulators, die ein proximales Ende (32) gegenüber dem proximalen Ende (12) der ersten Elektrode (120) aufweist, wobei diese proximalen Enden (12, 32) voneinander nur durch eine dielektrische Schicht (20) getrennt sind, so dass ein Wellenleiter (70) gebildet wird, der geeignet ist, das zu modulierende optische Signal zu führen,
**dadurch gekennzeichnet, dass**:
- das Verfahren nach dem Kleben des Substrats (44) auf die gekapselte Halbleiterschicht (3) und vor dem Ausführen der zweiten Elektrode (130), das Entfernen (522) des Trägers (1) umfasst, so dass eine Seite der vergrabenen Schicht (2) bloßgelegt wird, ohne ihre Dicke um mehr als 5 nm zu ändern, wobei dieses Entfernen (522) des Trägers (1) einen Vorgang des selektiven Ätzens mindestens einer dünnen Restschicht des Trägers (1), die direkt mit der vergrabenen Schicht (2) in Kontakt ist, unter Verwendung eines chemischen Mittels umfasst, das den Träger (1) mindestens 500 Mal schneller als die vergrabene Schicht (2) ätzt, und
- das Ausführen (524, 528) der zweiten Elektrode (130) direkt auf dieser bloßgelegten Seite der vergrabenen Schicht (2) erfolgt, so dass es nach dem Ausführen der zweiten Elektrode (130) die vergrabene Schicht (2) ist, die direkt die dielektrische Schicht (20) bildet, die zwischen den proximalen Enden (12, 32) der Elektroden angeordnet ist.

2. Verfahren nach Anspruch 1, bei dem:
- das Bereitstellen (500) eines Stapels das Bereitstellen eines Stapels umfasst, in dem:
• der Träger (1) aus Silicium ist,
• die vergrabene Schicht (2) eine Schicht aus thermischem Siliciumoxid ist, das heißt durch Oxidation der Oberfläche des Trägers bei einer Temperatur von mehr als 700 °C erhalten wird, und
- der Schritt des Ausführens der zweiten Elektrode umfasst:
• das direkte Kleben (524) einer Schicht (30) aus Halbleitermaterial auf die bloßgelegte Seite der vergrabenen Schicht (2), dann
• das lokalisierte Ätzen (528) dieser Schicht (30) aus Halbleitermaterial, um die zweite Elektrode (130) zu bilden.

3. Verfahren nach einem der vorhergehenden Ansprüche, bei dem:
- das Ätzen der ersten Elektrode (120) ein lokalisiertes Ätzen (514) umfasst, welches das Zwischenstück (13) der ersten Elektrode verdünnt, ohne ihr proximales Ende (12) zu verdünnen, so dass dieses Zwischenstück weniger dick als das proximale Ende der ersten Elektrode ist, und
- das Ausführen der zweiten Elektrode (130) das Positionieren dieser zweiten Elektrode in Bezug auf das proximale Ende (12) der ersten Elektrode derart umfasst, dass sich das proximale Ende (32) der zweiten Elektrode sich systematisch in Querrichtung, beidseits des proximalen Endes (12) der ersten Elektrode erstreckt.

4. Verfahren nach einem der Ansprüche 1 bis 2, bei dem das Ausführen (524, 528) der zweiten Elektrode umfasst:
- einen Schritt des lokalisierten Ätzens, der ein Zwischenstück (584) der zweiten Elektrode (582) verdünnt, wobei dieses Zwischenstück (584) zwischen ihrem distalen (31) und ihrem proximalen (32) Ende gelegen ist, so dass dieses Zwischenstück weniger dick als das proximale Ende (32) der zweiten Elektrode ist, und
- das Positionieren dieser zweiten Elektrode (582) in Bezug auf das proximale Ende (12) der ersten Elektrode (592) derart, dass sich die erste Elektrode (592) sich systematisch in Querrichtung beidseits des proximalen Endes (32) der zweiten Elektrode (582) erstreckt.

5. Verfahren nach einem der vorhergehenden Ansprüche, bei dem das Verfahren das lokalisierte Dotieren der Halbleiterschicht (43) an der Stelle des proximalen Endes (564) der ersten (562) oder der zweiten Elektrode derart umfasst, dass eine erste Region (566) dieses proximalen Endes, das mit der dielektrischen Schicht (20) direkt in Kontakt ist, stärker dotiert ist als eine zweite Region (568), die weiter von der dielektrischen Schicht (20) entfernt ist, wobei die Dicke der ersten Region (566) größer oder gleich 70 nm ist.

6. Verfahren nach Anspruch 1, bei dem die Dicke der vergrabenen Schicht (2) kleiner oder gleich 25 nm oder 15 nm ist.

7. Verfahren nach einem der vorhergehenden Ansprüche, bei dem:
- das Ätzen (514, 516) der Halbleiterschicht (43) einen ersten Wellenleiter (220) gleichzeitig mit der ersten Elektrode (120) strukturiert, dann
- das Verfahren ferner das Ausführen (524, 526, 528), auf der bloßgelegten Seite der vergrabenen Schicht (2) und gegenüber dem ersten Wellenleiter (220), eines zweiten Wellenleiters (200) aus III-V-Material umfasst, das geeignet ist, ein optisches Signal zu verstärken, das von dem Modulator (100) moduliert werden kann, wobei dieser zweite Wellenleiter mit dem ersten Wellenleiter über die vergrabene Schicht (2) gekoppelt ist.

8. Verfahren nach einem der vorhergehenden Ansprüche, bei dem das Bereitstellen (500) eines Stapels das Bereitstellen eines Stapels umfasst, in dem die Dicke e₂ᵢₙᵢ der vergrabenen Schicht größer als 7 nm und kleiner als 100 nm ist.

9. Modulator (100; 550; 560; 570; 580; 590) der Ausbreitungsverluste und des Ausbreitungsindex eines optischen Signals, der mit einem Herstellungsverfahren nach Anspruch 1 hergestellt wird, wobei dieser Modulator umfasst:
- ein Substrat(44), das sich hauptsächlich in einer "Ebene des Substrats" genannten Ebene erstreckt,
- eine Halbleiterschicht (3), die in ein dielektrisches Material (116) gekapselt ist, wobei diese gekapselte Halbleiterschicht eine direkt zum Substrat (44) gewandte Unterseite und eine zur entgegengesetzten Seite des Substrats (44) gewandte Oberseite umfasst, wobei diese gekapselte Halbleiterschicht (3) auch mindestens eine erste Elektrode (120) des Modulators umfasst, die aus dem Halbleitermaterial ausgeführt ist, wobei sich diese erste Elektrode (120) entlang einer Querrichtung parallel zur Ebene des Substrats von einem proximalen Ende (12) über ein Zwischenstück (13) bis zu einem distalen Ende (11) erstreckt und sich das dielektrische Material in dieser Querrichtung fortsetzt, bis es das proximale Ende der ersten Elektrode direkt berührt, wobei die proximalen (12) und distalen (11) Enden und das Zwischenstück (13) bündig mit der Oberseite der gekapselten Halbleiterschicht (3) sind,
- eine zweite Elektrode (130) aus Halbleitermaterial, das eine Dotierung mit entgegengesetztem Vorzeichen zu dem der ersten Elektrode (120) aufweist, wobei sich diese zweite Elektrode von einem proximalen Ende (32) über ein Zwischenstück bis zu einem distalen Ende (31) erstreckt, wobei das proximale Ende (32) dem proximalen Ende (12) der ersten Elektrode gegenüber gelegen ist und das distale Ende (31) auf der zum distalen Ende (11) der ersten Elektrode entgegengesetzten Ebene gelegen ist in Bezug auf eine Ebene, die senkrecht zu der Querrichtung ist und durch die proximalen Enden verläuft,
- eine dielektrische Schicht (20), die zwischen den proximalen Enden (12, 32) der ersten und zweiten Elektroden angeordnet ist, wobei die Überlagerung der proximalen Enden (12, 32) und der dielektrischen Schicht (20) einen Wellenleiter (70) bildet, der geeignet ist, das zu modulierende optische Signal zu führen,
- Kontaktanschlüsse (21, 22), die jeweils direkt in mechanischem und elektrischem Kontakt mit den distalen Enden (11, 31) der ersten und zweiten Elektroden sind, um diese Elektroden elektrisch mit unterschiedlichen elektrischen Potentialen zu verbinden, so dass die Dichte der Ladungsträger in dem Wellenleiter geändert wird, **dadurch gekennzeichnet, dass** das proximale Ende (12; 564) der ersten Elektrode (120; 562) dicker als das Zwischenstück (13) dieser ersten Elektrode (120; 562) ist, wobei die Dicke e₁₃ des Zwischenstücks zu diesem Zweck kleiner als 0,8e₁₂ ist, wobei e₁₂ die maximale Dicke des proximalen Endes (12, 564) ist.

10. Modulator nach Anspruch 9, bei dem das proximale Ende (564) der ersten (562) oder der zweiten Elektrode eine direkt in Kontakt mit der dielektrischen Schicht (20) befindliche Region (566) umfasst, die stärker dotiert ist als eine zweite Region (568) dieses proximalen Endes (564), die weiter von der dielektrischen Schicht (20) entfernt ist.

11. Modulator nach Anspruch 10, bei dem die Dicke der ersten Region (566) größer oder gleich 70 nm ist.

12. Modulator nach einem der Ansprüche 9 bis 11, bei dem die Schicht aus dielektrischem Material eine Schicht aus thermischem Oxid ist, die durch Oxidation eines Substrats bei mehr als 700 °C erhalten wird.

13. Modulator nach einem der Ansprüche 9 bis 12, bei dem die Dicke der dielektrischen Schicht (20) an jedem Punkt e₂ᵢₙᵢ bis auf plus oder minus 10 nm genau beträgt, wobei e₂ᵢₙᵢ eine Konstante gleich der durchschnittlichen Dicke der dielektrischen Schicht ist.

14. Modulator nach einem der Ansprüche 9 bis 13, bei dem sich das proximale Ende (32) der zweiten Elektrode (130) über eine Distanz von mindestens 5 nm in Querrichtung beidseits des proximalen Endes (12) der ersten Elektrode erstreckt.

## Claims

1. Method of fabricating a modulator of the propagation losses and of the index of propagation of a guided optical signal, this method comprising:
- providing (500) a stack comprising, successively, a base substrate (1), a buried layer (2) of dielectric material and a semiconductor layer (43), the thickness at every point of the buried layer (2) being equal to e₂ᵢₙᵢ to within approximately 5 nm, where e₂ᵢₙᵢ is a constant equal to the average thickness of the buried layer, then
- etching (514, 516) the semiconductor layer (43) so as to structure a first electrode (120) of the modulator within this semiconductor layer (43), this first electrode (120) having a proximal end (12), a distal end (11) and an intermediate part (13) extending, in a transverse direction (X), from the proximal end (12) up to the distal end (11) so as to mechanically and electrically connect these ends (11, 12), then
- encapsulating (518) the structured semiconductor layer (43) in a dielectric material (116) so as to obtain a semiconductor layer (3) encapsulated within a dielectric material in which layer the dielectric material continues, in the transverse direction, until it directly touches the proximal end of the first electrode, then
- bonding (520) a substrate (44) onto the encapsulated semiconductor layer (3), then
- forming (524, 528) a second electrode (130) of the modulator having a proximal end (32) facing the proximal end (12) of the first electrode (120), these proximal ends (12, 32) being separated from each other only by a dielectric layer (20) in such a manner as to form a waveguide (70) able to guide the optical signal to be modulated,
**characterized in that**:
- following the bonding of the substrate (44) onto the encapsulated semiconductor layer (3) and prior to the formation of the second electrode (130), the method comprises the removal (522) of the base substrate (1) in such a manner as to expose one face of the buried layer (2) without modifying its thickness by more than 5 nm, this removal (522) of the base substrate (1) comprising an operation of selective etching of at least a residual thin layer of the base substrate (1) directly in contact with the buried layer (2), using a chemical agent which etches the base substrate (1) at least 500 times faster than the buried layer (2), and
- the formation (524, 528) of the second electrode (130) is implemented directly on this exposed face of the buried layer (2) such that, once the second electrode (130) has been formed, it is the buried layer (2) that directly forms the dielectric layer (20) interposed between the proximal ends (12, 32) of the electrodes.

2. Method according to Claim 1, wherein:
- providing (500) a stack comprises the provision of a stack in which:
• the base substrate (1) is made of silicon,
• the buried layer (2) is a layer of thermal silicon oxide, in other words obtained by oxidation of the surface of the base substrate at a temperature higher than 700°C, and
- the step of forming the second electrode comprises:
• the direct bonding (524) of a layer (30) of semiconductor material onto the exposed face of the buried layer (2), then
• the localized etching (528) of this layer (30) of semiconductor material so as to form the second electrode (130).

3. Method according to either of the preceding claims, wherein:
- the etching of the first electrode (120) comprises a localized etching (514) which thins the intermediate part (13) of the first electrode without thinning its proximal end (12) such that this intermediate part is thinner than the proximal end of the first electrode, and
- the formation of the second electrode (130) comprises the positioning of this second electrode with respect to the proximal end (12) of the first electrode in such a manner that the proximal end (32) of the second electrode systematically extends, in the transverse direction, on either side of the proximal end (12) of the first electrode.

4. Method according to either of Claims 1 and 2, wherein the formation (524, 528) of the second electrode comprises:
- a step of localized etching which thins an intermediate part (584) of the second electrode (582), this intermediate part (584) being situated between its distal end (31) and proximal end (32) such that this intermediate part is thinner than the proximal end (32) of the second electrode, and
- the positioning of this second electrode (582) with respect to the proximal end (12) of the first electrode (592) in such a manner that the first electrode (592) systematically extends, in the transverse direction, on either side of the proximal end (32) of the second electrode (582).

5. Method according to any one of the preceding claims, wherein the method comprises the localized doping of the semiconductor layer (43) at the location of the proximal end (564) of the first (562) or of the second electrode in such a manner as to dope a first region (566) of this proximal end directly in contact with the dielectric layer (20) more highly than a second region (568) further away from the dielectric layer (20), the thickness of the first region (566) being greater than or equal to 70 nm.

6. Method according to Claim 1, wherein the thickness of the buried layer (2) is less than or equal to 25 nm or 15 nm.

7. Method according to any one of the preceding claims, wherein:
- the etching (514, 516) of the semiconductor layer (43) structures a first waveguide (220) at the same time as the first electrode (120), then
- the method further comprises the formation (524, 526, 528), on the exposed face of the buried layer (2), facing the first waveguide (220), of a second waveguide (200) made of III-V material able to amplify an optical signal able to be modulated by the modulator (100), this second waveguide being coupled to the first waveguide through the buried layer (2).

8. Method according to any one of the preceding claims, wherein the provision (500) of a stack comprises the provision of a stack in which the thickness e₂ᵢₙᵢ of the buried layer is greater than 7 nm and less than 100 nm.

9. Modulator (100; 550; 560; 570; 580; 590) of the propagation losses and of the index of propagation of an optical signal, fabricated by a method of fabrication in accordance with Claim 1, this modulator comprising:
- a substrate (44) extending mainly in a plane called "plane of the substrate",
- a semiconductor layer (3) encapsulated in a dielectric material (116), this encapsulated semiconductor layer comprising a lower face directly turned towards the substrate (44) and an upper face turned to the side opposite to the substrate (44), this encapsulated semiconductor layer (3) also comprising at least a first electrode (120) of the modulator formed in the semiconductor material, this first electrode (120) extending, in a transverse direction parallel to the plane of the substrate, from a proximal end (12) up to a distal end (11) via an intermediate part (13) and the dielectric material continuing, in this transverse direction, until it directly touches the proximal end of the first electrode, the proximal (12) and distal (11) ends and the intermediate part (13) being flush with the upper face of the encapsulated semiconductor layer (3),
- a second electrode (130) made of semiconductor material having a doping of opposite sign to that of the first electrode (120), this second electrode extending from a proximal end (32) up to a distal end (31) via an intermediate part, the proximal end (32) being situated facing the proximal end (12) of the first electrode and the distal end (31) being situated on the opposite side to the distal end (11) of the first electrode with respect to a plane perpendicular to the transverse direction and going through the proximal ends,
- a dielectric layer (20) interposed between the proximal ends (12, 32) of the first and second electrodes, the superposition of the proximal ends (12, 32) and of the dielectric layer (20) forming a waveguide (70) able to guide the optical signal to be modulated,
- bump contacts (21, 22) in direct mechanical and electrical contact with, respectively, the distal ends (11, 31) of the first and second electrodes for electrically connecting these electrodes to different electrical potentials in such a manner as to modify the density of the charge carriers in the waveguide,
**characterized in that** the proximal end (12; 564) of the first electrode (120; 562) is thicker than the intermediate part (13) of this first electrode (120; 562), the thickness e₁₃ of the intermediate part being, for this purpose, less than 0.8e₁₂, where e₁₂ is the maximum thickness of the proximal end (12, 564).

10. Modulator according to Claim 9, wherein the proximal end (564) of the first (562) or of the second electrode comprises a region (566) directly in contact with the dielectric layer (20), which region is more highly doped than a second region (568) of this proximal end (564) further away from the dielectric layer (20).

11. Modulator according to Claim 10, wherein the thickness of the first region (566) is greater than or equal to 70 nm.

12. Modulator according to any one of Claims 9 to 11, wherein the layer of dielectric material is a layer of thermal oxide obtained by oxidation of a substrate at over 700°C.

13. Modulator according to any one of Claims 9 to 12, wherein, at every point of the dielectric layer (20), its thickness is equal to e₂ᵢₙᵢ to within approximately 10 nm, where e₂ᵢₙᵢ is a constant equal to the average thickness of the dielectric layer.

14. Modulator according to any one of claims 9 to 13, wherein the proximal end (32) of the second electrode (130) extends, over a distance of at least 5 nm, in the transverse direction on either side of the proximal end (12) of the first electrode.
